# EUROPEAN PATENT APPLICATION

(11) **EP 1 191 374 A2**
(43) Date of publication of application: **27.03.2002**
(21) Application number: 01120579.6
(22) Date of filing: 29.08.2001
(51) Int. Cl.: G02B 6/36, G02B 6/293, G02B 6/16

(54) **Long period fiber grating package**

(30) Priority: 29.08.2000 KR 2000050504
(71) Applicant: SAMSUNG ELECTRONICS CO., LTD., Suwon-City, Kyungki-do (KR)
(72) Inventor: Jang, Joo-Nyung, Samsung Electronics Co., LTD., Suwon-City, Kyungki-Do (KR)
(74) Representative: Grünecker, Kinkeldey, Stockmair & Schwanhäusser Anwaltssozietät

(57) **Abstract**

There is provided a package for holding long period fiber gratings formed in an optical fiber from which an outer coating (14) is partially removed. A recoating (11) is applied to the long period fiber gratings to maintain the optical characteristics of the long period fiber gratings, and a silica glass tube (12) is fixed around the recoating to protect the long period fiber gratings from an ambient environment.

## Description

### 1. Field of the Invention

The present invention relates generally to packaging of long period fiber gratings, and in particular, to a long period fiber grating package that operates stably regardless of changes in ambient environment.

### 2. Description of the Related Art

A fiber grating removes or reflects light at a specific wavelength by inducing a periodic change in the refractive index of an optical fiber using a UV (Ultra Violet) laser. A long period fiber grating having a period of hundreds of micrometers can be used as a gain flattening filter for an EDFA (Erbium Doped Fiber Amplifier) because it removes light at a particular wavelength by coupling light from a core mode to a cladding mode. The central wavelength and extinction ratio of the long period fiber grating are determined by mode coupling between the core mode and the cladding mode. Therefore, when an optical fiber is bent due to stress or an ambient environmental change, the period of changing the refractive index is slightly varied. As a result, the characteristic of the long period fiber grating is also changed.

To eliminate the influence on the refractive index change from the outside of a cladding, a double cladding structure has been employed for a refractive index distribution in an optical fiber. That is, an additional cladding is applied on the outer surface of a primary cladding to prevent the boundary between the primary cladding and the secondary cladding from being influenced by an ambient environment like moisture. However, protection of wavelengths against temperature change requires the difficult task of accurately controlling a refractive index distribution and a dopant concentration in an optical fiber.

It is, therefore, an object of the present invention to provide a long period fiber grating package that ensures temperature compensation and reliability and that protects gratings against ambient influences in order to prevent introduction of moisture and to induce a stable change in a refractive index.

The foregoing and other objects of the present invention can be achieved by providing a package for holding long period fiber gratings formed in an optical fiber from which an outer coating is partially removed. A recoating is applied to the long period fiber gratings to maintain the optical characteristics of the long period fiber gratings, and a silica glass tube is fixed around the recoating to protect the long period fiber gratings from an ambient environment.

### BRIEF DESCRIPTION OF THE DRAWINGS

The above and other objects, features and advantages of the present invention will become more apparent from the following detailed description when taken in conjunction with the accompanying drawings in which:
FIG. 1 is a perspective view of a long period fiber grating package according to the present invention; and
FIG. 2 is a sectional view of the long period fiber grating package according to the present invention.

### DETAILED DESCRIPTION OF THE PREFERRED EMBODIMENT

A preferred embodiment of the present invention will be described hereinbelow with reference to the accompanying drawings. In the following description, well-known functions or constructions are not described in detail since they would obscure the invention in unnecessary detail.

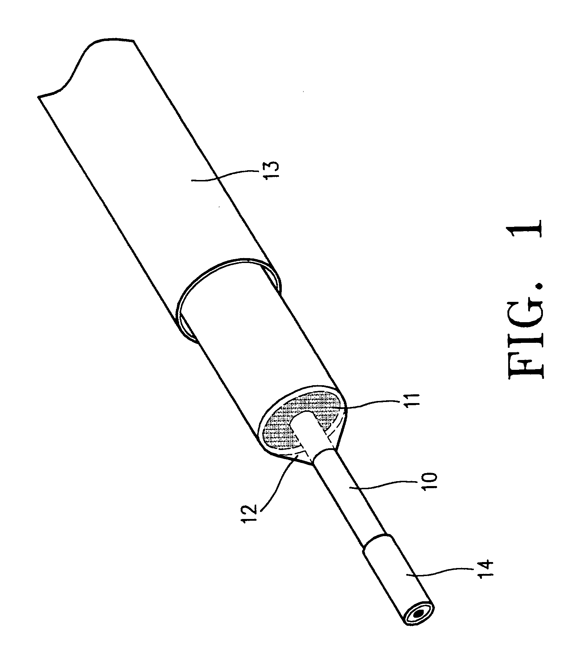

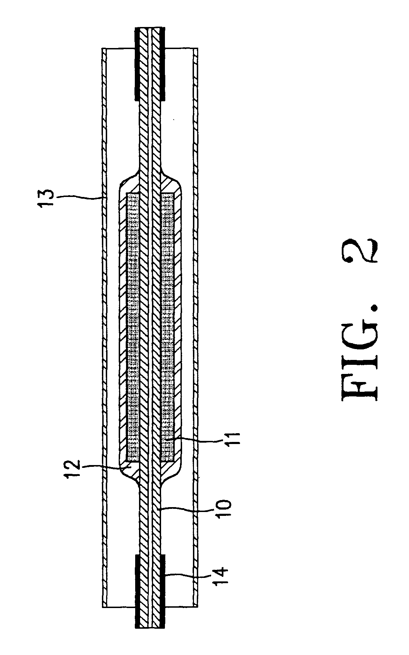

Referring to FIGs. 1 and 2, a long period fiber grating package according to the present invention is so configured that it protects long period fiber gratings in an optical fiber 10 from which an outer coating 14 is removed against an ambient environment.

A recoating 11 is applied to grating portions to maintain the optical characteristics of the long period fiber gratings and a silica glass tube 12 is fixed around the recoating 11 to protect the long period fiber gratings from the ambient environment.

The long period fiber gratings are formed in the optical fiber 10 using a UV laser and an amplitude mask after the coating of the optical fiber 10 is partially removed. The long period fiber gratings can be inserted into a predetermined fixing tube (not shown). After the grating portion is inserted through a predetermined insertion groove formed in the fixing tube, the recoating 11 can be applied. Here, the fixing tube is formed of a silica material with the same thermal expansion coefficient as that of the fiber gratings.

The recoating 11 is a gel type silicon material like silicon resin. The silicon material protects the fiber gratings from external stresses when it is hardened.

The silica glass tube 12 around the outer surface of the recoating 11 helps the long period fiber gratings to maintain their original function regardless of changes in ambient environment. Here, both ends of the glass tube 12 are closely fused on the cladding layer of the optical fiber 10 using an arc discharger, thereby preventing introduction of external moisture.

Then, a protection tube 13 is fixed around the outermost circumferential surface of the optical fiber 10 sealed with the recoating 11 and the silica glass tube 12. The protection tube 13 can be a metal tube, particularly, a stainless steel tube.

A predetermined adhesive (not shown) can be applied to both end potions of the inserted optical fiber 10 to bond the outer coating 14 with the protection tube 13. This prevents the coating 14 from sliding across the optical fiber 10 due to external stresses, to thereby maintain the optical characteristics of the long period fiber gratings stably.

As described above, the long period fiber grating package of the present invention fixes a silica glass tube around the recoating of long period fiber gratings. Therefore, the long period fiber gratings are protected against environmental changes and thus operate stably.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A package for holding long period fiber gratings formed in an optical fiber (10) from which an outer coating (14) is partially removed, comprising:
a recoating (11) applied to the long period fiber gratings to maintain the optical characteristics of the long period fiber gratings; and
a silica glass tube (12) fixed around the recoating to protect the long period fiber gratings from an ambient environment.

2. The package of claim 1, wherein both ends of the silica glass tube (12) are fused on the cladding of the optical fiber using an arc discharger.

3. The package of claim 1 or 2, wherein a protection tube (13) is fixed around the outermost circumferential surface of the optical fiber (10) sealed with the recoating (11) and the silica glass tube (12).
